Europäisches Patentamt

European Patent Office

Office européen des brevets

(11) Publication number: **0 405 400 A2**

# EUROPEAN PATENT APPLICATION

(21) Application number: 90112039.4

(22) Date of filing: 25.06.90

(51) Int. Cl.⁵: **H04N 1/387**, G06K 9/20

(30) Priority: 30.06.89 JP 170497/89
30.06.89 JP 170498/89
30.06.89 JP 170502/89

(43) Date of publication of application:
**02.01.91 Bulletin 91/01**

(84) Designated Contracting States:
**DE FR GB IT NL**

(71) Applicant: MITA INDUSTRIAL CO., LTD.
2-28, 1-chome, Tamatsukuri Chuo-ku
Osaka 540(JP)

(72) Inventor: Fujimoto, Masaya, 106-go
Syanburetto-rokko,
3-2-10 Hiehara-cho
Kobe-Shi, Hyogo(JP)
Inventor: Yamamoto, Haruo
640.7 Oaza Shichiyama, Kumatori-cho
Sennan-gun, Osaka(JP)
Inventor: Matsushita, Tsukasa
3-27-12 Hukono
Daito-shi, Osaka(JP)
Inventor: Kumamoto, Hidechika
3-2-4-509 Kamotanidai
Sakai-shi, Osaka(JP)

(74) Representative: Schwan, Gerhard, Dipl.-Ing.
Elfenstrasse 32
D-8000 München 83(DE)

(54) **Image distinguishing device.**

(57) This invention relates to an image distinguishing device for distinguishing a area surrounded by a marker line (for instance, drawn by a half-tone marking pen) of half tone area on a document image and can be preferably utilized for trimming or masking on the document image, for example, in a digital document copying machine or a facsimile.

In the image distinguishing device, the reading data of a document image is binarized with two mutually different threshold values (for instance, the bits corresponding to the white and black area are classified as "0" and bits corresponding to the half tone area are classified as "1").

And the starting point and terminating point of the marker line for each of the scanning lines are detected from the binarized data and the one-dimensional marker line is detected for each line.

Continuously, the leadingness and the consecutiveness of the marker line pertaining the plane of the document is distinguished from the mutual relationship of the one-dimensional marker line for each of the lines as shown in the above. And the area surrounded by the two-dimensional marker line is detected.

Fig.1 (a)

# IMAGE DISTINGUISHING DEVICE

## BACKGROUND OF THE INVENTION

### Field of the invention

This invention relates to an image distinguishing device for distinguishing a area surrounded by a marker line (for instance, drawn by a half-tone marking pen) of half tone area on a document image and can be preferably utilized for image processing of a document, for example, in a digital document copying machine or a facsimile.

### Description of the Prior Art

Conventionally, when trimming and masking a specified area on a document image, an operator must recognize the area to be processed for the above trimming and masking, on the coordinate system for the document image and must designate the area to be processed, by using the coordinate data obtained at that time. This is a troublesome task for an operator.

## SUMMARY OF THE INVENTION

Hence, the inventors have researched to develop a device by which the specified area can be securely recognized only with simple operation. As a result, the inventors could develop a device having such functions as can very easily recognize the above specified area only by surrounding the area, which is intended to be trimmed or masked on a document image, by a half tone marker line drawn by, for instance, a marking pen.

In order to accomplish the above objects, first main means which is employed in the present invention is, in the gist thereof, an image distinguishing device for distinguishing an area surrounded by a marker line of a half tone area on a document image, comprising binarization processing means to binarize the reading data of the document image with two mutually different threshold values, first memorizing means to memorize the data obtained by the binarization processing means, first detection means to detect the starting point and the terminating point of a marker line for each of the scanning lines from the data memorized by the first memorizing means and to detect the one-dimensional marker line pertaining to each of the scanning lines, and second detection means to distinguish the leadingness and the consecutiveness of marker line pertaining to the plane of the document from the mutual relationship of the one-dimensional marker line for each of the scanning lines detected by the first detection means and further to detect the area surrounded by the two-dimensional marker line.

In a first distinguishing device according to the invention, the reading data of a document image is binarized and processed (for instance, bits corresponding to the white and black area are distinguished as "0" and bits corresponding to the half tone area are distinguished as "1") with two mutually different threshold values by the binarization processing means and are memorized by the first memorizing means.

And the starting point and the terminating point of the marker line for each of the scanning lines can be detected from the data memorized by the first memorizing means by the first detection means, and accordingly, the one-dimensional marker line pertaining to each of the scanning lines can be detected.

Consecutively, the leadingness and the consecutiveness of the marker line concerning the plane of the document are distinguished from the mutual relationship of the one-dimensional marker line for each of the scanning lines can be detected by the first detection means. Then, the area surrounded by the two-dimensional marker line can be detected by the second detection means.

In order to achieve the objects, second main means which is employed in the present invention is, in the gist thereof, an image distinguishing device for distinguishing the area surrounded by the marker line of the half tone area on a document image, comprising binarization processing means to binarize the reading data of the document image with two mutually different threshold values, first memorizing means to memorize the data obtained by the binarization processing means, first detection means to detect the starting point and the terminating point of a marker line for each of the scanning lines from the data memorized by the first memorizing means and to detect the one-dimensional marker line pertaining to each of the scanning lines, and third detection means to distinguish the leadingness and the consecutiveness of the marker line pertaining to the plane of the document from the mutual relationship of the one-dimensional marker line for each of the scanning lines detected by the first detection means, to continue a nonconsecutive part by calculating a hypothetical marker line in the case that for any of the nonconsecutive parts the length of the non-consecutive part is less than the appointed distance, and further to detect the area surrounded by the two-dimensional marker line.

In the second distinguishing device according to the invention, the reading data of a document image is binarized and processed (for instance, the bits corresponding to the white and black area are distinguished as "0" and the bits corresponding to the half tone area are distinguished as "1") with two mutually different threshold values by the binarization processing means and are memorized by the first memorizing means.

And the starting point and the terminating point of the marker line for each of the scanning lines can be detected from the data memorized by the first memorizing means by the first detection means, and accordingly, the one-dimensional marker line pertaining to each of the scanning lines can be detected.

Consecutively, the leadingness and the consecutiveness of the marker line concerning the plane of the document are distinguished from the mutual relationship of the one-dimensional marker line for each of the scanning lines can be detected by the first detection means. And the non-consecutive part is continued by calculating a hypothetical marker line in the case that for any of the non-consecutive parts the length of the non-consecutive part is less than the appointed distance, and further the area surrounded by the two-dimensional marker line can be detected by the third detection means.

In order to achieve the objects, third main means which is employed in the present invention is, in the gist thereof, an image distinguishing device for distinguishing the area surrounded by the marker line of the half tone area on a document image, comprising binarization processing means to binarize the reading data of the document image with two mutually different threshold values, first memorizing means to memorize the data obtained by the binarization processing means, first detection means to detect the starting point and the terminating point of a marker line for each of the scanning lines from the data memorized by the first memorizing means and to detect the one-dimensional marker line pertaining to each of the scanning lines, second detection means to distinguish the leadingness and the consecutiveness of the marker line pertaining to the plane of a document from the mutual relationship of the one-dimensional marker line for each of the scanning lines detected by the first detection means and to detect the area surrounded by the two-dimensional marker line, and second memorizing means to overlap and memorize each of the data of the area surrounded by the two-dimensional marker line which are detected in relation to a plurality of scanning directions by means of the second detection means.

In the third distinguishing device according to the invention, the reading data of a document image is binarized and processed (for instance, the bits corresponding to the white and black area are distinguished as "0" and the bits corresponding to the half tone area are distinguished as "1") with two mutually different threshold values by the binarization processing means and are memorized by the first memorizing means.

And the starting point and the terminating point of the marker line for each of the scanning lines can be detected from the data memorized by the first memorizing means by the first detection means, and accordingly, the one-dimensional marker line pertaining to each of the scanning lines can be detected.

Consecutively, the leadingness and the consecutiveness of the marker line concerning the plane of the document are distinguished from the mutual relationship of the one-dimensional marker line for each of the scanning lines can be detected by the first detection means. And the area surrounded by the two-dimensional marker line is detected by the second detection means.

The processing is conducted by the second detection means with the scanning direction for a document changed in relation to the data in the first memorizing means (for instance, the processing is made one after another in the main scanning direction (in the direction of line) and the sub scanning direction (in the direction of row) with the position of the four corners of a document used as scanning origin, respectively). The data obtained thereby is overlapped and memorized in the second memorizing means one after another. Namely, a map for a document in the area surrounded by the two-dimensional marker line is formed in the second memorizing means.

Therefore, by utilizing each of the above image distinguishing devices, it is possible to recognize the parts to be trimmed or masked on a document image very easily.

## BRIEF DESCRIPTION OF THE DRAWINGS

Fig. 1 (a) and Fig. 1 (b) are block diagrams of an image distinguishing device according to one of the preferred embodiments of the present invention, respectively,

Fig. 2 (a) through Fig. 2 (f) are flow charts showing the procedure on distinguishing the area surrounded by the marker line by means of the image distinguishing device,

Fig. 3(a) and Fig. 3(b) are views for explaining the detection of the area surrounded by the two-dimensional marker line on a document image,

Fig. 4 (a), Fig. 4 (b) and Fig. 4 (c) are views for explaining the case of distinguishing the consecutiveness of a half-tone area concerning the plane of a document from the mutual relationship of one-dimensional half-tone domains, respectively,

Fig. 4 (d) is a view for explaining the case of distinguishing the leadingness of the marker line concerning the plane of the document from the mutual relationship of the marker line of one-dimensional half tone domains, and

Fig. 5 (a) through Fig. 5 (j) are views for explaining one of the detailed examples of various patterns and data of the marker line on a document, respectively.

DETAILED DESCRIPTION OF THE PREFERRED EMBODIMENTS

An example of the embodiment of the present invention will be explained with reference to the drawings accompanied therewith for understanding the invention. The following embodiment is one of the preferred embodiments of the invention, which does not intend to limit the technical scope of the invention.

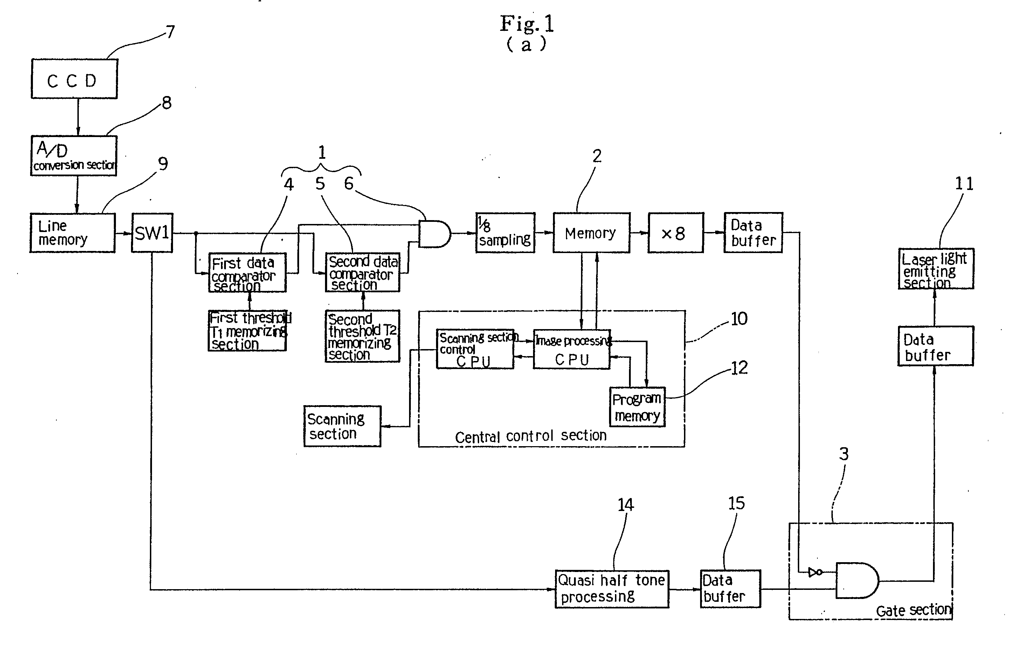

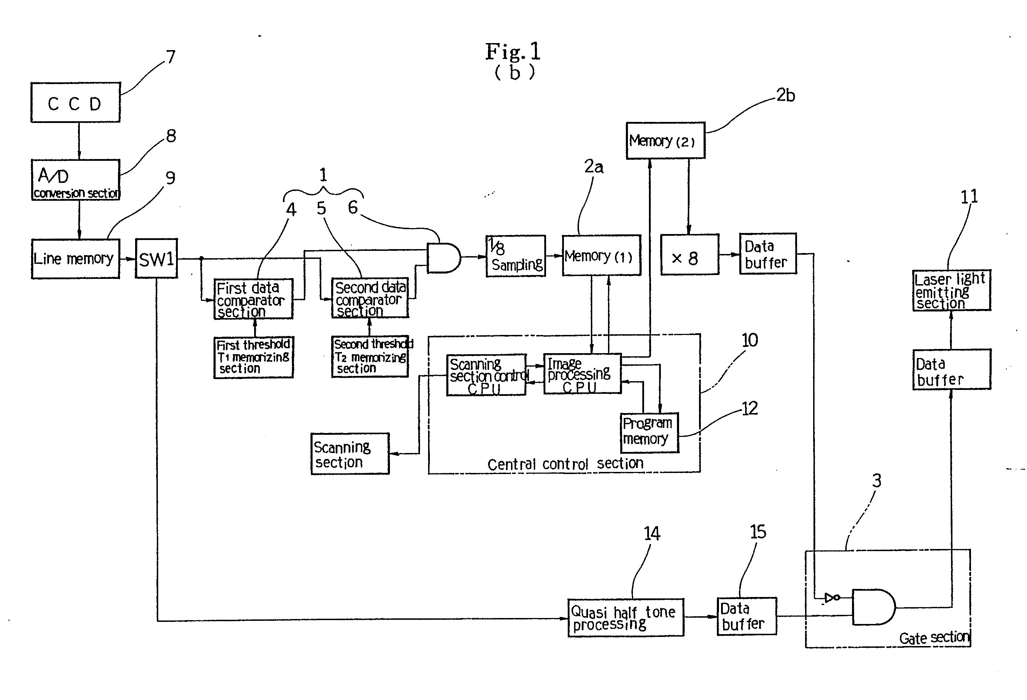

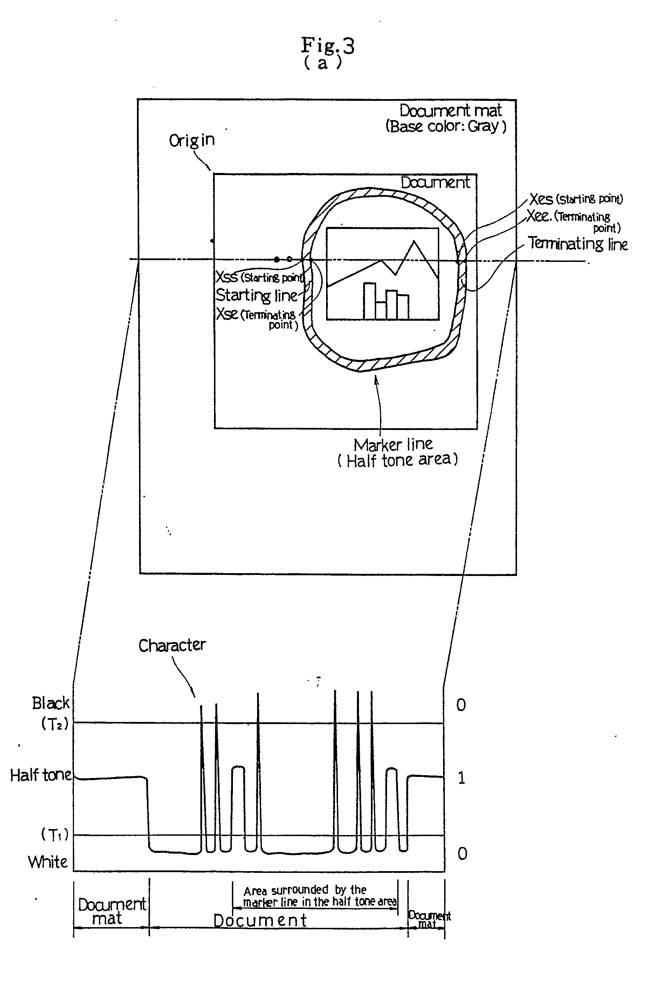

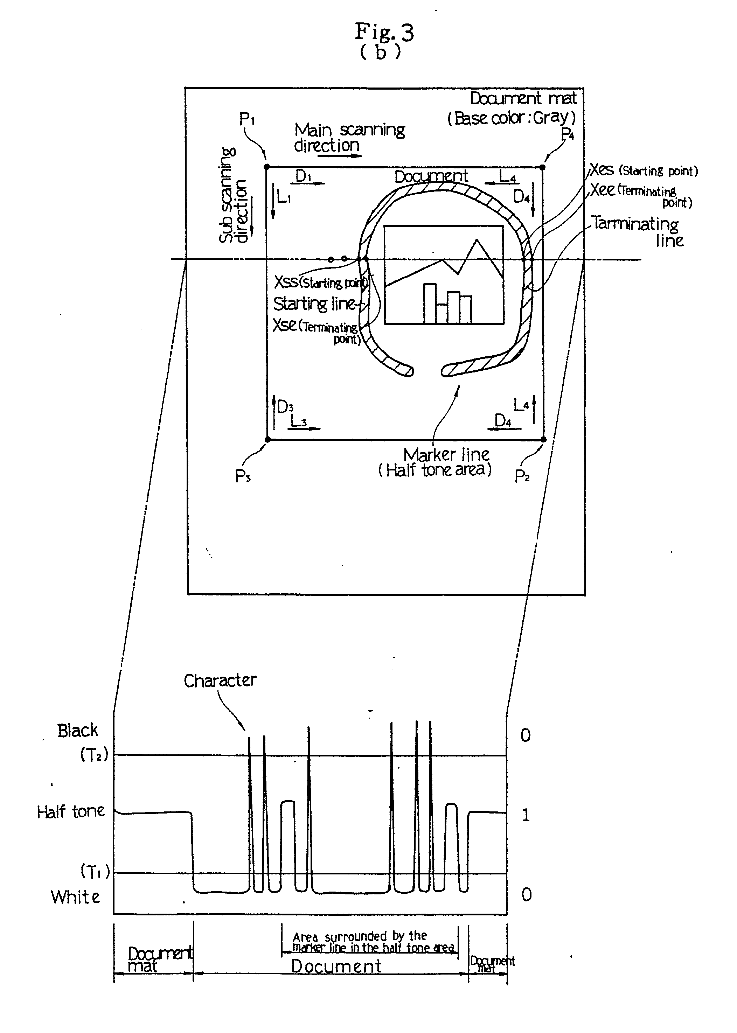

As shown in Fig. 1 (a), the first image distinguishing device according to the invention comprises binarization processing means 1 for binarizing the reading data of the document image with two mutually different threshold values T1 and T2 (Refer to Fig.3 (a)), first memorizing means 2 to memorize the data obtained by the binarization processing means 1, first detection means to detect the starting point and the terminating point of a marker line (half tone area) for each of the scanning lines from the data memorized by the first memorizing means 2 and to detect the one-dimensional marker line pertaining to each of the scanning lines, and second detection means to distinguish the leadingness and the consecutiveness of marker line pertaining to the plane of the document from the mutual relationship of the one-dimensional marker line for each of the scanning lines detected by the first detection means and further to detect the area surrounded by the two-dimensional marker line.

Also, the device according to the embodiment further comprises changeover means 3 for carrying out image processing according to the data of the area surrounded by the two-dimensional marker line, which is detected by the second detection means, in addition to the above composition.

In the binarization processing means 1, the reading data of the document image is compared with the first threshold value T1 in the first data comparison section in and is further compared with the second threshold value T2 in the second data comparison section 5. Furthermore, each of the data is inputted in an "AND" gate 6, and the reading data of smaller values than the first threshold value T1 is regarded as white bit "0" and the reading data of larger values than the second threshold value T2 is regarded as black bit "0".

The reading data whose value is larger than the first threshold value T1 but smaller than the second threshold value T2 is extracted as half tone bit "1".

The data binarized by the binarization processing means 1 is sampled for instance at a frequency of 1/8 in order to decrease the data memorizing volume and is inputted in the first memorizing means 2.

The reading data of a document image is the data of density that the output signal from a CCD line sensor 7 is analog-digitally converted to digital data by an A/D converter 8 and is divided into 256 gradations per dot. Then, the reading data is memorized in a line memory 9 as density data per line.

And the data of one line is outputted from the line memory 9 according to the output of horizontal synchronous signal (not illustrated).

The data outputted from the line memory 9 is outputted in the binarization processing means 1 through a switch SW1 on sub (dummy) scanning. Also, the switch SW1 is changed over on image processing. And the image data is read by the CCD line sensor 7 again. Thus, the image data is outputted to the change means 3 through the quasi half tone processing section 14 (for determining the data according to the gradation) and a data buffer 15 per line. Accordingly, the change means 3 operates in accordance with the data from the central control section 10 (including the position and size data of a document).

Also, in this case, it is possible to get rid of sub scanning action on image processing by using, as data buffer 15, a memory having the capacity equivalent to the memory which the capacity of the first memorizing means 2 is octoplicated.

The first detecting means and the second detecting means are embodied by the processing program memorized in advance in a memory of the cental control section 10.

The change means 3 consists of logic circuits furnished with a plurality of gates. And after the data is sampled at a frequency of 1/8 as shown in the above and is processed by the second detecting means as shown in the above, the data memorized in the first memorizing means 2 is octuplicated, respectively, and is inputted in the gate of the change means 3. In this case, the data memorized by the first memorizing means 2 is processed in advance by the central control section 10 as data for specifying the area surrounded by the two-dimensional marker line.

Hence, as the change means 3 operates according to the signals from the first memorizing means 2, the image is selectively processed one after another at a high speed according to the data of the area surrounded by the two-dimensional marker line detected by the second detection means. In this case, for instance, the image processing is conducted by making ON and OFF control of a laser light emitting section 11 according to the patterns by changing those of dither matrix.

The image distinguishing device according to the invention is so composed as shown in the above.

Consecutively, with reference to Fig. 1 (a), Fig. 2 (a), Fig. 2(b) and Fig. 3 (a), the following description explains the processing procedure in the image distinguishing device of this embodiment.

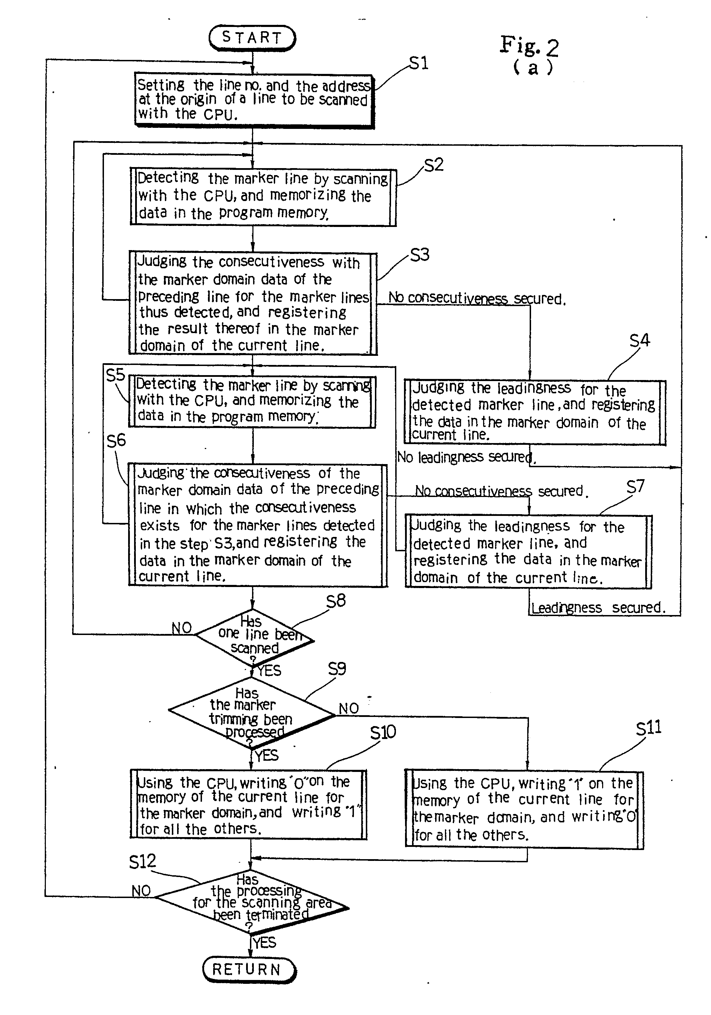

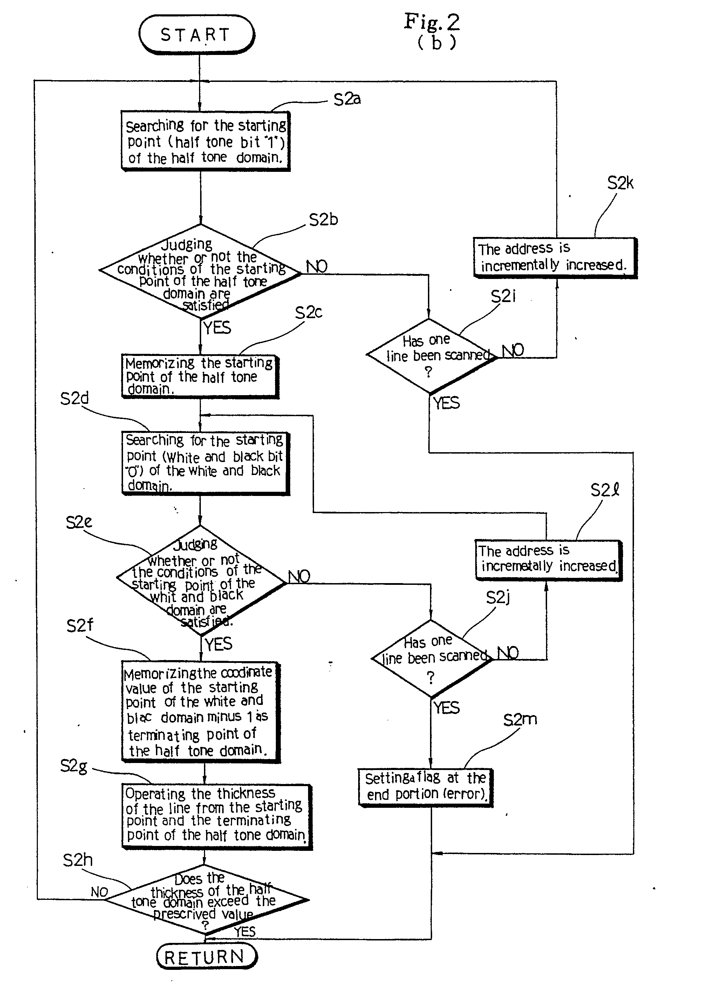

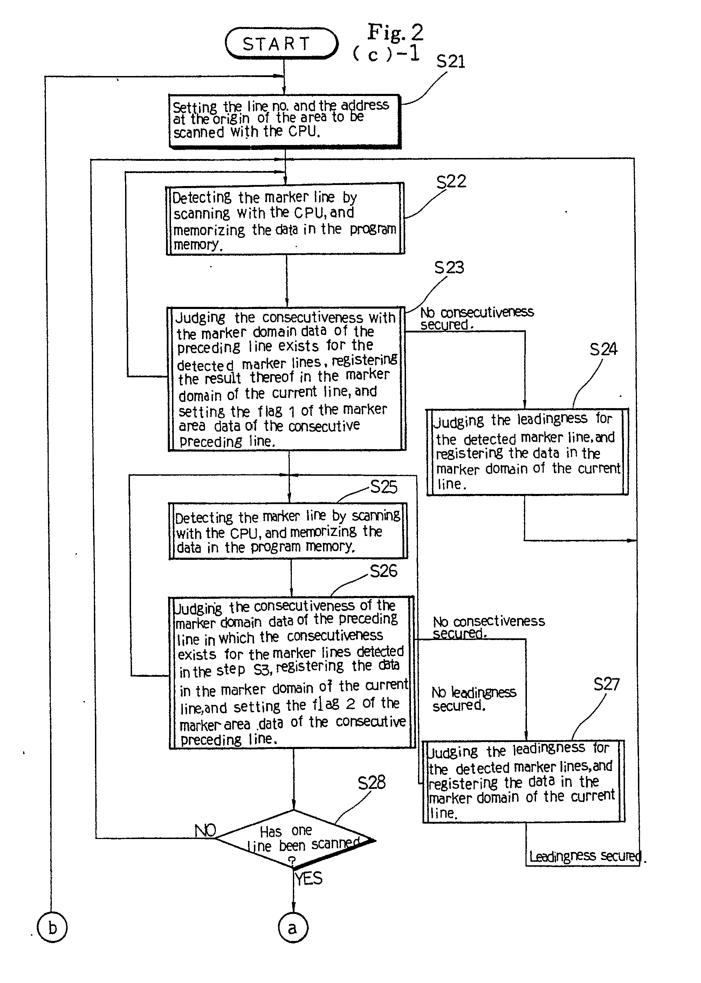

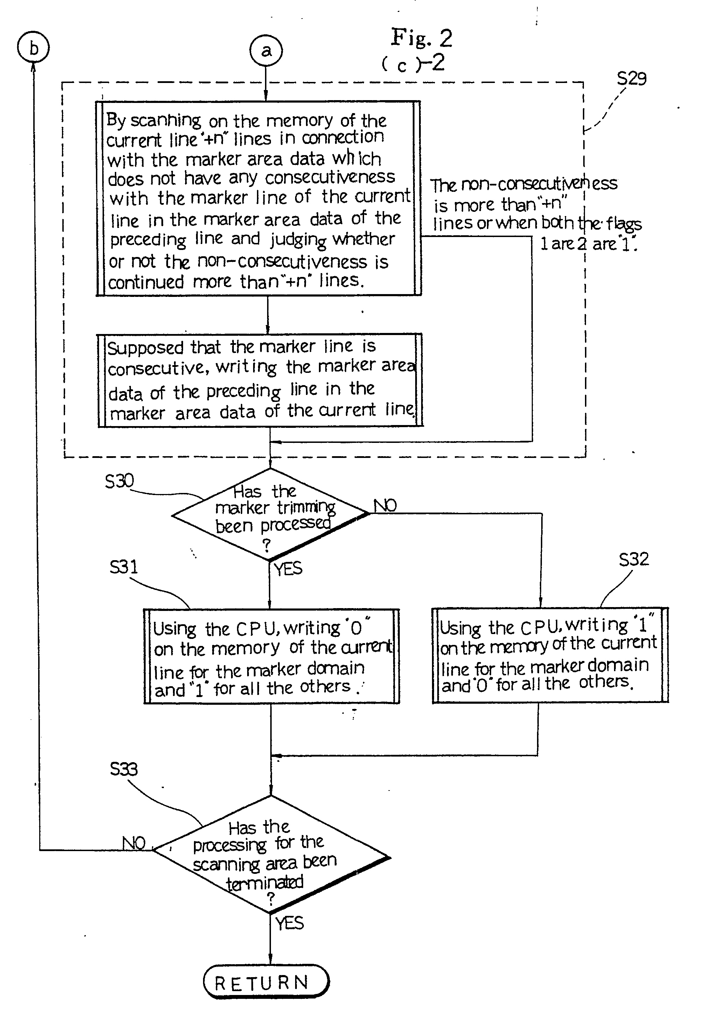

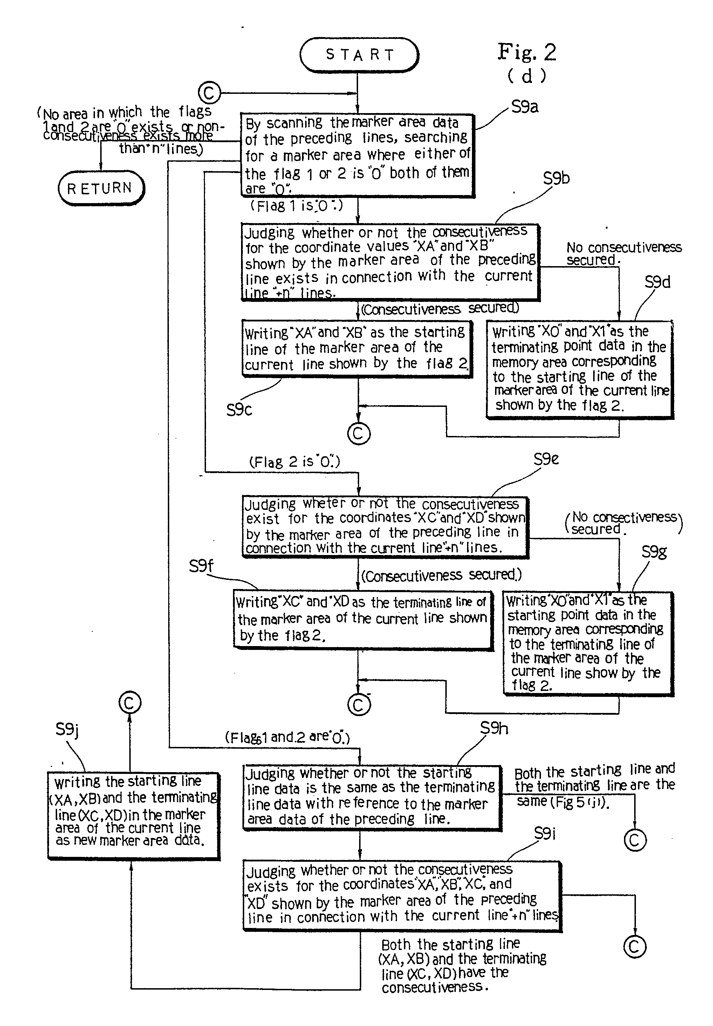

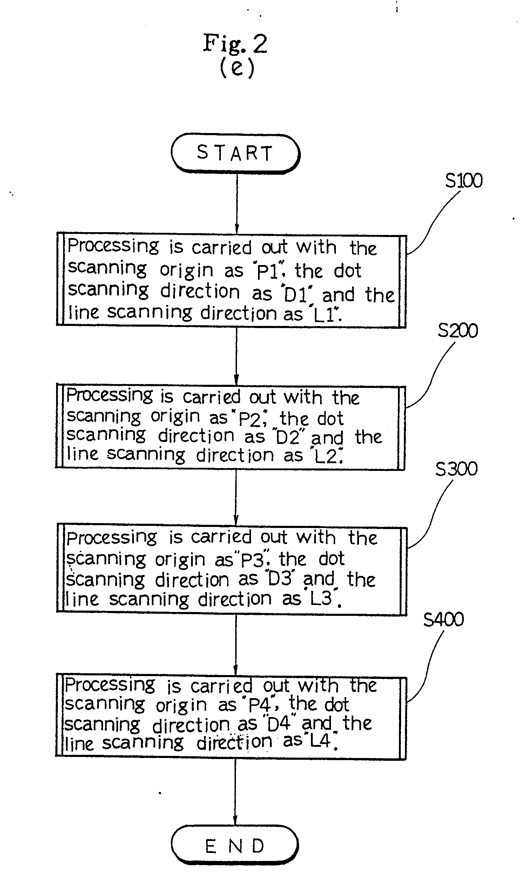

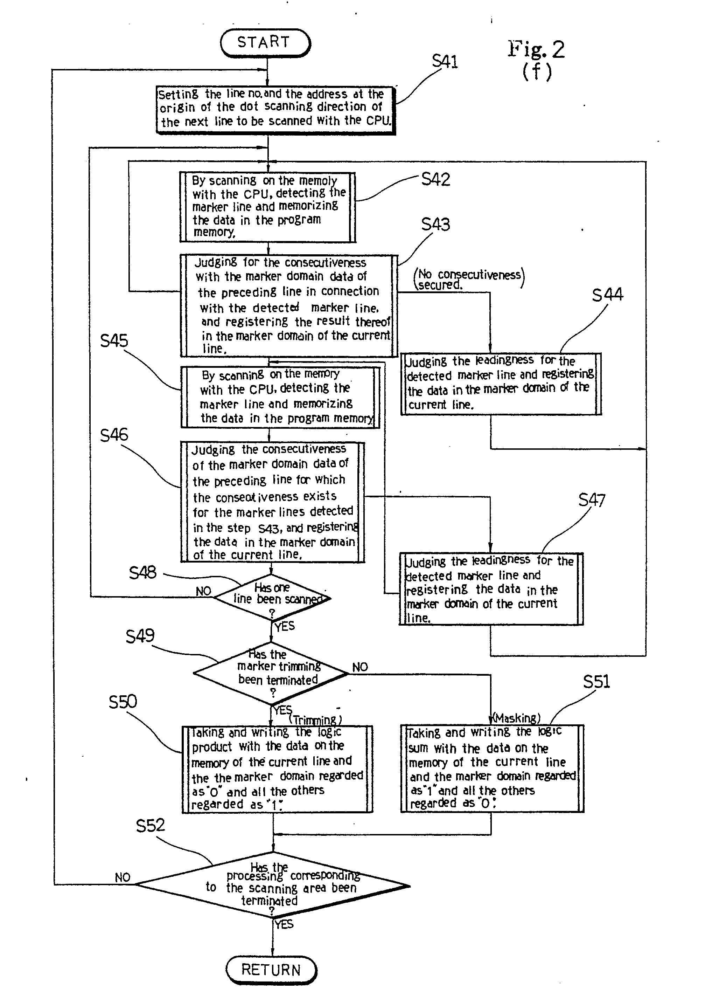

Here, S1, S2 in Fig. 2 show respective steps of action.

Firstly, in the step S1, a line number and an address are set at the origin of the area scanned by the central control section 10 in relation to the data in the first memorizing means 2. Also, the data of each of the lines is binarized and processed by the binarization processing means 1 as regarding the white and black bits as "0" and the half tone bits as "1", sampled at a frequency of 1/8 and inputted in the first memorizing means 2.

Subsequently, in the step S2, the starting point and the terminating point of the marker line are detected for the data of data of one line, and the data of this starting point and this terminating point is memorized in a program memory 12 in the central control section 10.

The details of the processing procedure in the step S2 is explained below on the basis of Fig. 2 (b).

Firstly, as an address is set at the lead of a line to be scanned, the starting point of the half tone domain is searched for in the step S2a.

And it is judged in the step S2b whether the conditions of the starting point of the half tone domain are satisfied. In this case, if, for instance, more than "n" bits are occupied by the half tone bits "1" in the appointed number of "N" bits which have been predetermined, the leading section of the "n" bits is judged as the starting point of the half tone domain.

The data of the starting point (address) of the half tone domain thus detected is memorized in the program memory 12 (Step S2c).

Consecutively, in the step S2d, the starting point of the white and black domain is searched for. And it is judged in the step S2e whether or not the conditions of the starting point of the white and black domain are satisfied. In this case, if, for instance, more than "S" bits are occupied by the white and black bits "O" in the appointed number of "T" bits which have been predetermined, the leading section of the "O" bits is judged as the starting point of the white and black domain.

The address which 1 is subtracted from the coordinate value of the starting point (address) of the white and black domain thus detected is memorized in the program memory 12 as the terminating point of the half tone domain (Step S2f).

Consecutively, in the step S2g, the width dimension of this domain is operated from the data of the starting point and the terminating point of the half tone domain. And in the case that this value is more than the appointed dimension (for instance more than 5mm), the half tone domain is recognized as part of the marker line (Step S2h).

The processing in the steps S2b and S2e is continued with the address in the steps S2k and S2l increased incrementally, until it is judged that the scanning has been terminated in the steps S2i and S2j regardless of presence or absence of the marker line in the scanning lines.

Also, in the case that it is judged that the scanning has been terminated in the step S2j, a half tone domain may exist at the end portion of a document. Hence, a flag is set in the step S2m, aiming at expressing that a marker line is formed at the end portion of a document.

In this case, the starting point and the terminating point of the marker line for each. of the scanning lines are detected from the data memorized by the first memorizing means 2 to cause first detection means for detecting the one-dimensional marker line for each scanning line to be composed in the step S2.

And as the starting point and the terminating point are distinguished by the ratio of occupation of the half tone bits and the white and black bits in a plurality of bits as shown in the above, erroneous judgement which may occur due to flaw or stains on the document image can be avoided.

As shown aboves, the starting point and the terminating point of the marker line of each scanning line are detected and memorized in the program memory 12. Then, in the step S3 (refer to Fig. 2 (a)), it is distinguished whether or not the consecutiveness between each data of the starting line and the terminating line (This is the conceptional division taken it into consideration the scanning direction when processing the data of the marker line. Refer to Fig. 3(a)) of the marker domain data of the preceding line and that of the current line exists, and the result thereof is registered in the marker domain of the current line.

In this case, in the case that there is consecutiveness between the starting line and the terminating line of the marker domain data of the preceding line and those of the current line or that there is consecutiveness between the terminating line of the current line and that of the preceding line, the processing in the step S2 is carried out.

On the other hand, in the case that the consecutiveness is negated in the step S3, the leadingness is distinguished for the detected marker line in the step S4, and the data is registered in the marker domain of the current line.

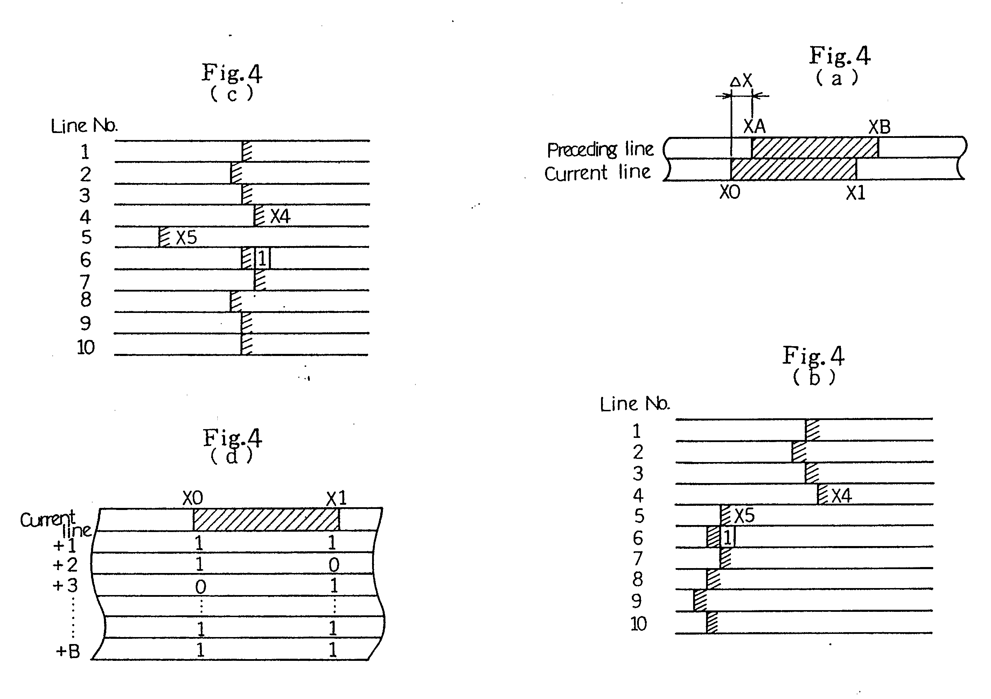

Here, as shown in Fig. 4 (a), supposed that the starting point of the one-dimensional marker line in the preceding line is "XA" bit and the same starting point on the current line is "XO" bit, the difference "ΔX" of the number of bits concerning the direction of line between the "XA" bit and "XO" bit is less than the appointed number of bits which has been predetermined, it is distinguished that there is two-dimensional consecutiveness at the marker line on the preceding line and the current line.

Such a processing as shown in the above is conducted for the terminating point of each line. And in the case that it is distinguished that there is consecutiveness at the starting point and the terminating point, it is judged that there is consecutiveness as domain of the marker line.

At this moment, in the case that the consecutiveness is negated, it is distinguished whether or not the position of the line number "6" corresponding to "X5" bit of the line number "5" is of the half tone bit "1", for instance, for the line numbers "in" and "5", in Fig. 4 (b). If the position is of the half tone bit "1", "X5" is registered as the starting point of the half tone domain of the line number

In the case that the line numbers "in", "5" and "6" are in such a relationship as shown in Fig. in (c), it is judged whether or not the position of the line number "6" corresponding to "X4" bit of the line number "4" is of the half tone bit "1". If the position is of the half tone bit "1", the "X4" is registered as starting point of the half tone domain of the line number "5" (The "X5" is eliminated as irregular point).

Such a processing as shown in the above is also conducted for the terminating point of each scanning line. In the case that each of the above conditions is not satisfied, it is finally distinguished that the terminating point is not in the domain of the marker line.

Also, as shown in Fig. 4 (d), in the case that bits more than the predetermined number of bits are occupied by the half tone bits "1" in the bit "B" (the number of bits in the direction of row) for "XO" bit and "X1" bit in the range from the current line to the "B" line, the current line is distinguished to be the lead section of the two-dimensional marker line.

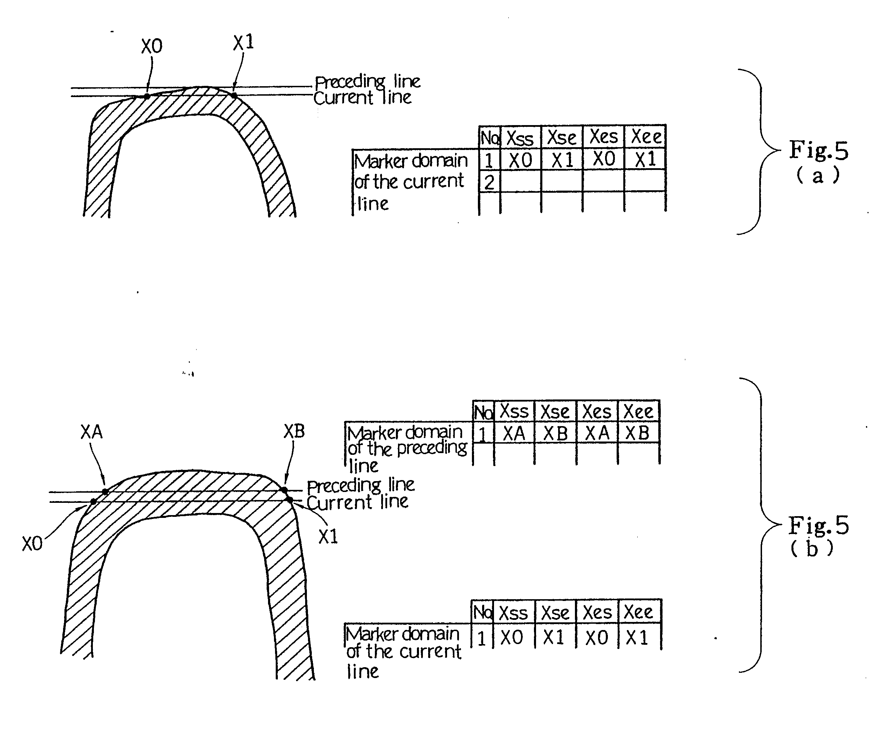

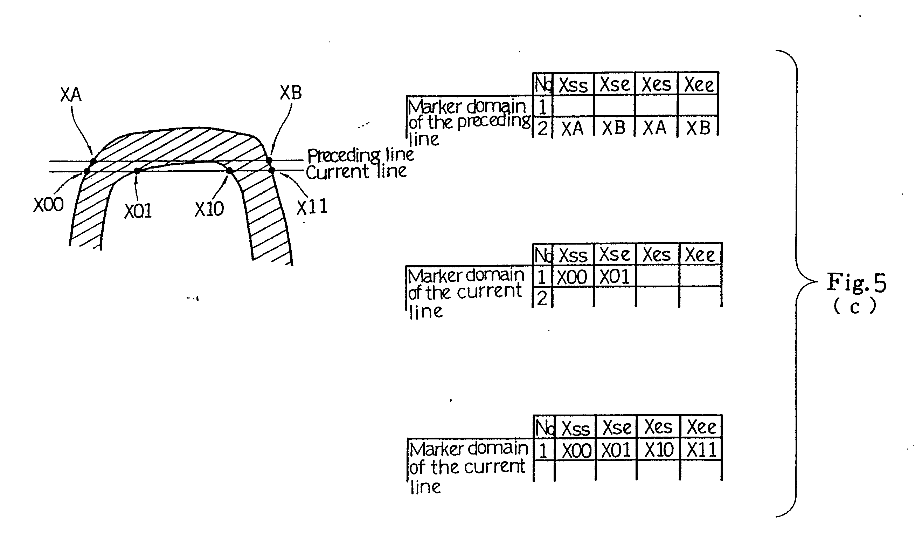

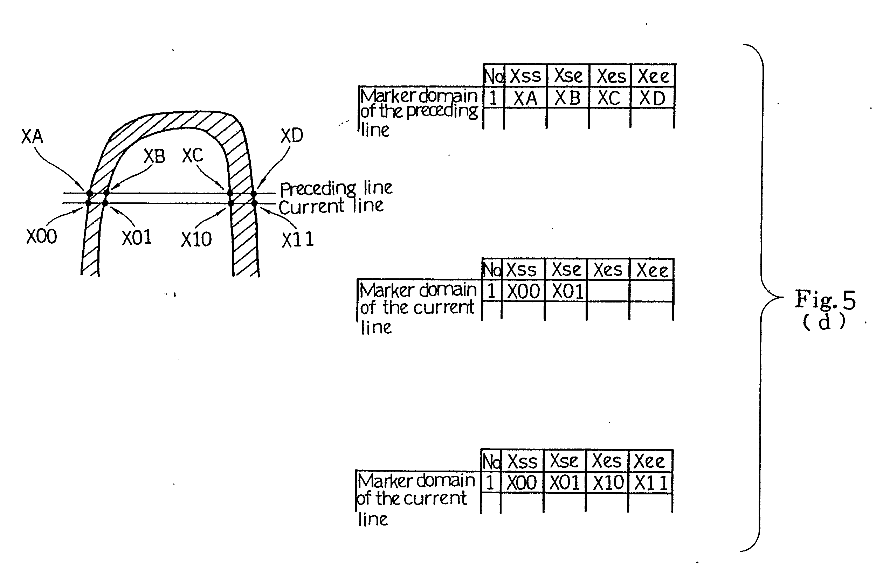

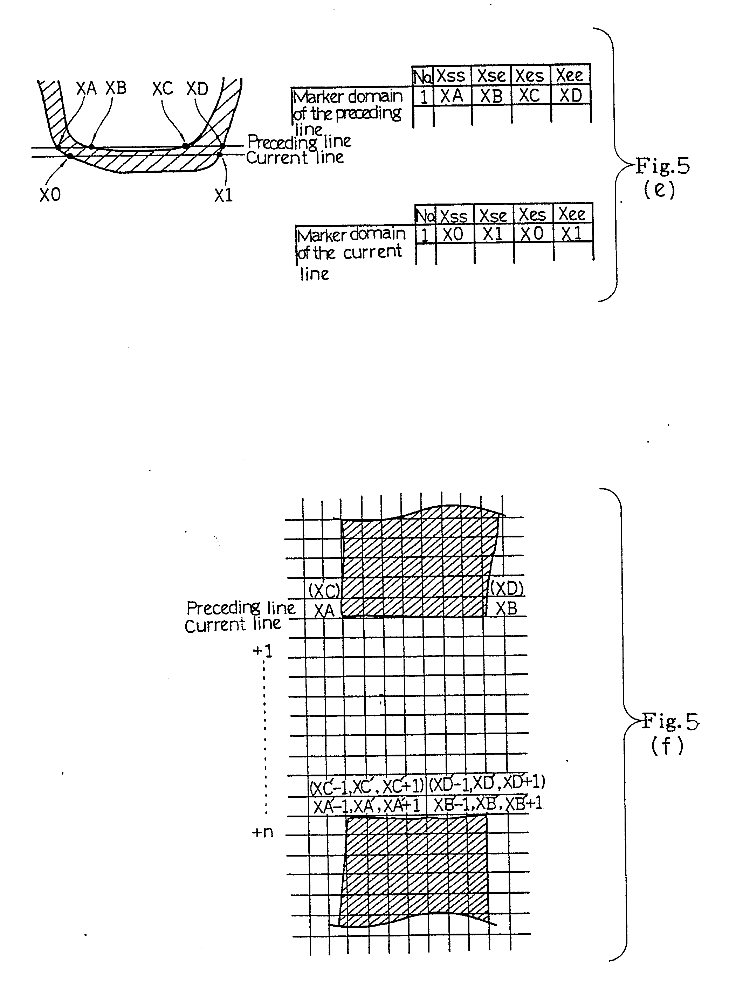

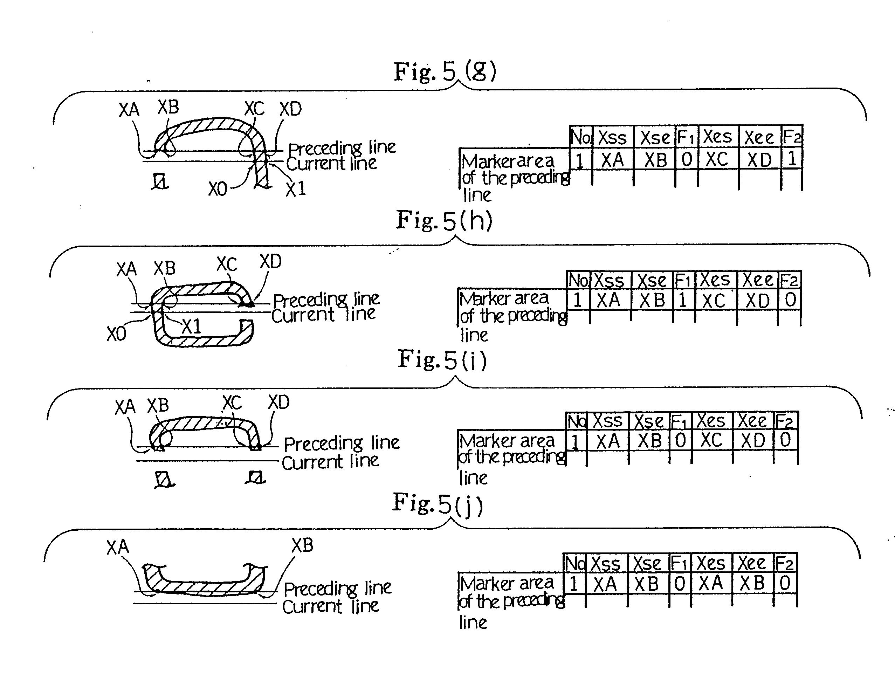

And, for instance, as shown in Fig. 5 (a), in the case that the marker line data (XO, X1) of the current line satisfies the leadingness, the data is registered in the program memory 12 as marker domain of the current line. That is, "XO" is registered as the starting point "Xss" of the starting line and the starting point "Xes" of the terminating line, and "X1" is registered as the terminating point "Xse" of the starting line and the terminating point "Xee" of of the terminating line.

As the leadingness of the marker line is distinguished as shown in the above, the marker line is detected again in the step S2 and the consecutiveness thereof is distinguished in the step S3.

With reference to Fig.5 (b) through Fig. 5 (e), one of the detailed examples for distinguishing and registering the consecutiveness of the marker domain data between the preceding line and the current line is explained below;

Firstly, as shown in Fig. 5 (b), as it is distinguished that there is consecutiveness between the starting point "XA" of the starting line of the preceding line marker domain "1" and the above "XO" of the current line for the marker line data (XO, X1) of the current line, "XO" and "X1" are registered as the starting point and the terminating point of the starting line of the marker domain "1" of the current line, respectively. Then, if it is distinguished that there is consecutiveness between the terminating point XB of the terminating line of the marker domain "1" of the preceding line and the above "X1" of the current line, the "XO" and "X1" are registered as the starting point and the terminating point of the terminating line of the marker domain "1" of the current line.

As shown in Fig. 5 (c), if it is distinguished that there is consecutiveness between the starting point "XA" of the starting line of the marker domain "2" of the preceding line and the above "Xoo" of the current line for the marker line data (Xoo, Xo1) of the current line, the Xoo and Xo1 are registered as the starting point and the terminating point of the starting line of the marker domain "1" of the current line.

In such a case as shown in Fig. 5 (d), if it is distinguished that there is consecutiveness between the starting point "XA" of the starting line of the marker domain "1" of the preceding line and the above "Xoo" of the current line for the marker line data (Xoo, Xo1) of the current line or there is consecutiveness between the terminating point "XB" of the starting line of the preceding line and the above "Xoo" of the current line, the "Xoo" and "Xo1" are registered as the starting point and the terminating point of the starting line of the marker domain "1" of the current line.

As shown in Fig. 5 (e), if it is distinguished that there is consecutiveness between the starting point "XA" of the starting line of the marker domain "1" of the preceding line and the above "Xoo" of the current line for the marker line data (XO, X1) of the current line, the "XO" and "X1" are registered as the starting point and the terminating point of the starting line of the marker domain "1" of the current line.

As shown in the above, after having processed in the step S3 as that there is consecutiveness as the starting line of the marker domain data of the preceding line, the marker line in the scanning lines is detected in the step S5 as well as in the case of the above step S2. Continuously, if there is consecutiveness for the marker line detected in the step S3, the consecutiveness of the terminating line data of the marker domain data of the preceding line is distinguished in the step S6. And in the case that it is distinguished that there is the consecutiveness, the data is registered in the marker domain of the current line.

In the case that the consecutiveness is negated in the above step S6, the processing similar to that in the step S4 is conducted in the step S7. This corresponds to the processing when the starting line and/or the terminating line to form the marker line is discontinued.

On the basis of Fig. 5 (c) through Fig. 5 (e), the ensuing description explains the detailed example of the case that it is judged in the step S6 that there is the consecutiveness between the marker domain data of the current line and that of the preceding line and the data thereof is registered.

Firstly, in such a case as shown in Fig.5 (c), in connection with the marker line data (X10, X11) of the current line, it is judged whether or not there is the consecutiveness with the points (Xes, Xee) of the marker domain "2" of the preceding dine for which it has been judged that the consecutiveness exists in the step S3. And in the case that it has been judged that the consecutiveness exists between the points "XB" and "X11", the points (X10, X11) are registered as the starting point and the terminating point of the terminating line of the marker domain "1" of the current line.

In such a case as shown in Fig. 5 (d), in connection with the marker line data (X10, X11) of the current line, in the case that it is judged that the consecutiveness exists between the terminating line "XC" of the marker domain "1" of the preceding line for which it has been judged in the step S3 that the consecutiveness exists and the above "X10" of the current line or that the consecutiveness exists between "XD" and "X11", the points (X10, X11) are registered as the starting point and the terminating point of the terminating line of the marker domain "1" of the current line.

In such a case as shown in Fig. 5 (e), as it is judged that the consecutiveness exists between the terminating line "XD" of the marker domain "1" of the preceding line for which it has been judged in the step S3 that the consecutiveness exists and the "X1" of the current line, the points (XO, X1) are registered as the starting point and the terminating point of the marker domain "1" of the current line.

As shown in the above description, as it has been judged that the processing concerning the scanning for each of the lines has been terminated and the area surrounded by the marker lines is detected (in the step S8), it is judged in the step S9 whether or not for instance the marker trimming processing is to be conducted for the area.

When it is judged in the step S9 that the trimming processing is conducted, "0" is written for the marker domain on the memory of the current line in the step S10 and "1" is written for all the others. On the other hand, in the case that it is judged in the step S9 that the trimming processing is not carried out, "1" is written for the marker domain on the memory of the current line and "0" is written for all the others, thereby causing the masking processing to be conducted (in the step S11).

Also, in this case, the marker area, that is, the area surrounded by the marker line is recognized as being in the scope surrounded by the starting point of the starting line to the terminating point of the terminating line.

In this case, in the steps S3, S4 and S6 through S11, the leadingness and consecutiveness of the marker line pertaining to the plane of the above document is distinguished from the mutual relationship of the one-dimensional marker line for each of the lines detected by the first detecting means, thereby causing the second detecting means for detecting the area surrounded by the two-dimensional marker lines to be composed.

Such a processing as shown in the above is repeatedly conducted until it is judged (in the step S12) that the processing has been terminated for all the scanning area, renewing the marker domain data of the current line and the marker domain data of the preceding line.

Also in this case, each of the data can be obtained under such a condition that the data is condensed to one-eighth.

Thereafter, the change means 3 is controlled and changed according to the data of the area surrounded by the two-dimensional marker lines detected as shown in the above, thereby causing the image processing corresponding to the masking or trimming to be selectively conducted at a high speed one after another.

Therefore, according to the image distinguishing device pertaining to this embodiment of the invention, it is remarkably simple to detect the portion to be about to be trimmed or masked on a document image only by surrounding the portion with, for instance, a half tone marker pen.

Continuously, the ensuing description explains the image distinguishing device according to the second example of the embodiments of the invention with reference to Fig. 1 (a).

The image distinguishing device according to this embodiment is so composed that it can be provided with third detecting means, instead of the second detecting means, by which the leadingness and the consecutiveness of the marker lines pertaining to the plane on the document can be distinguished from the mutual relationship of the one-dimensional marker line for each of the scanning lines detected by the first detecting means, a hypothetical marker line can be calculated for a non-consecutive portion if the non-consecutive distance thereof is less than the appointed distance, thereby causing the non-consecutive portion to be continued, and the area surrounded by the two-dimensional marker lines can be detected.

The third detecting means is embodied by the processing programs memorized in advance in the memory in the central control section 10 together with the first detecting means as well as the second detecting means.

Continuously, the processing procedure of the image distinguishing device according to this example of the embodiment with reference to Fig. 1 (a), Fig. 2 (b), Fig. 2(c), Fig. 2 (d), and Fig. 3 (a).

S21, S22, ... in Fig. 2 show each action step.

Firstly, in the step S21, a line number and an address are set up for the data in the first memorizing means 2 at the origin of the area scanned by the central control section 10. And the data for each of the lines is binarized, regarding the white and black bits as "0" and half tone bits as "1", by means of the binarization processing means 1 and is sampled at a frequency of 1/8, thereby causing the data to be inputted in the first memorizing means 2.

Continuously, in the step S22, the starting point and the terminating point of the marker·line concerning the data for one line are detected and the data of the starting point and the terminating point is memorized in the program memory 12 of the central control section 10.

The processing in the step S22 is just like the processing in the step S2, and as the details of the processing procedure is also the same as that in the steps S2a through S2m (See Fig. 2(b)), the explanation thereof is omitted herein.

In the step S22, the starting point and the terminating point of marker line at each line are detected and memorized in the program memory 12. Then, in the step S23 (Refer to Fig. 2 (c)), it is judged whether or not there exists the consecutiveness between each data of the starting line and the terminating line (this is the conceptional division, taking it into consideration the scanning direction when processing the data of the marker lines, and refer to Fig. 3 (a)) of the marker domain data of the preceding line and those of the current line, and the result thereof is registered in the marker domain of the current line. And a flag 1 of the marker area data of the preceding line which has been judged to be consecutive is set.

In this case, if the consecutiveness exists in the starting line and the terminating line of the marker domain data of the preceding line together with those of the current line or if the consecutiveness exists in each of the terminating lines of the current line and the preceding line, the processing in the step S22 is carried out.

On the other hand, in the case that the consecutiveness is negated in the step S23, the leadingness for the detected marker line is judged in the step S24, and the data thereof is registered in the marker domain of the current line.

The processing in the step S24 is similar to that in the step S4, and the detailed example thereof is the same as those in Fig. 4 (a) through Fig. 4 (d) and Fig. 5 (a). Therefore, the explanation thereof is omitted herein.

As the leadingness of the marker line is judged in the step S24, the marker line is detected again in the step S22, and the consecutiveness thereof is judged in the step S23. The detailed example of the embodiments for judging and registering the consecutiveness of the marker domain data between the preceding line and the current line in the step S23 (similar to the above step S3) is the same as those in Fig. 5 (b) through Fig. 5(e). Therefore, the detailed explanation thereof is omitted herein.

After it is processed in the step S23 that there exists the consecutiveness as the starting line of the marker domain data of the preceding line, the marker line in the scanning lines are scanned in the step S25 as well as the case of the step S22. Continuously, in the step S26, it is judged whether or not there exists the consecutiveness of the terminating line data of the marker domain data of the preceding line for which it has been judged that the consecutiveness exists for the marker line detected in the step S23. And in the case that it is judged that there exists the consecutiveness, the data thereof is registered in the marker domain of the current line, thereby causing the flag 2 of the marker area data of the consecutive preceding line to be set.

In the case that the consecutiveness is negated in the step S26, the processing similar to that of the step S24 is conducted. This corresponds to the processing in the case that the starting line and/or the terminating line to form the marker line is discontinued.

The detailed example for judging the consecutiveness between the marker domain data of the current line and the marker domain data of the preceding line in the step S26 and registering the data thereof is the same as the example in Fig. 5-(c) through Fig. 5(e) regarding the step S6. Therefore, the detailed explanation thereof is omitted herein.

Also in this case, the steps23 corresponds to the step S3 in the explanation regarding the step 56.

As it is judged (in the step S28) that the processing pertaining to the scanning for each of the lines has been terminated in the step S26, the scanning is performed on the memory of the current line + "n" lines in connection with the marker area data which has no consecutiveness with the marker line of the current line in the marker area data of the preceding line, thereby it is judged whether or not the consecutiveness is disconnected for more than + "n" lines.

As it is judged that the marker line is consecutive, the marker area data of the preceding line is written in the domain of the marker area data of the current line. Also, in the case that the consecutiveness is discontinued for more than +"n" lines or both the above flags 1 and 2 are "1", the WRITE processing as shown in the above is not conducted.

The detailed processing procedure in the step S29 is explained with reference to the Fig. 2 (d) and Fig. 5 (f) through Fig. 5 (j).

Firstly, in the step S9a, the marker area in which either the flag 1 or 2 is "0" or both the flags 1 and 2 are "0" is searched for by scanning the marker area data of the preceding line.

In the case that the flag 1 is "0" (refer to Fig. 5 (g)), it is judged in the step S9b whether or not there exists the consecutiveness for the coordinates "XA" and "XB" shown by the marker area of the preceding line with reference to the current line + "n" lines.

Namely, in the case that, in Fig. 5 (f), either one of, for instance, "XA$'$", "XA$'$+1", or "XA$'$-1" on the current line + "n" lines is the half tone bit "1" and either one of "XB$'$", "XB$'$+1" or "XB$'$-1" is the half tone bit "1", it is judged that there exists the consecutiveness. And in the step S9c "XA" and "XB" are written as the starting point and the terminating point of the starting line of the marker area of the current line shown by the flag 2. On the other hand, in the case that the consecutiveness is negated in the step S9b, (XO, X1) which are the terminating line data are written (in the step S9d) in the memory area corresponding to the starting point and the terminating point of the starting line of the marker area of the current line shown by the flag 2.

In the case that it is judged in the step S9a that the flag 2 is "0", the processing similar to that in the step S9b is carried out to judge whether or not there exists the consecutiveness, for the coordinates "XC" and "XD" shown by the marker area of the preceding line in connection with the current line + "n" lines (Step S9e, refer to Fig. 5 (h))

In the case that it is judged in the step Sge that there is the consecutiveness, "XC" and "XD" are written as the terminating line of the marker area of the current line shown by the flag 2.

On the other hand, in the case that the consecutiveness is negated in the step S9e, (XO, X1) are written as the starting line data in the memory area corresponding to the terminating line of the marker area of the current line shown by the flag 2 in the step S9g.

In the case that it is judged in the step S9a that both the flags 1 and 2 are "0", it is judged in the step 9h whether or not the starting line data and the terminating line data for the marker area data of the preceding line are the same. In the case that it is judged in the step S9h that the starting line data is different from the terminating line data, it is judged in the step S9i whether or not there exists the consecutiveness for the coordinates "XA", "XB", "XC" and "XD" shown by the marker area of the preceding line in relation to the current line + "n" lines, according to the procedure shown in the steps S9b and S9e. And in the case that it is judged in the step S9i that there exists the consecutiveness in the starting line (XA, XB) and the terminating line (XC, XD), the starting line (XA, XB) and the terminating line (XC, XD) are written as new marker area data of the current line in the step S9j.

Also, the above flags 1 and 2 are reset when sliding the marker area data of the current line to the marker area data of the preceding line.

As shown in the above, in the case that the distance of the non-consecutive portion is less than the appointed distance for the non-consecutiveness portion of the marker line, a hypothetic marker line is calculated, thereby causing the non-consecutive portion to be continued. As a result, even if the marker line is discontinued on the way, the portion is surely detected to be the area surrounded by the marker line.

As the area surrounded by the marker lines is detected as shown in the above, it is judged in the step S30 (Refer to Fig. 2(c)), whether or not , for instance, the marker trimming processing is carried out for the area.

In the case that it has been judged that the trimming processing is carried out in the step S30, "0" is written for the marker domain on the memory of the current line in the step S31 and "1" is written for all the others. On the other hand, it has been judged in the step S30 that the trimming processing is not carried out, "1" is written for the marker domain on the memory of the current line and "0" is written for all the others, thereby causing the masking processing to be done (in the step S32).

Also, in this case, the marker area, i.e., the area surrounded by the marker lines is recognized as the scope surrounded by the starting point of the starting line to the terminating point of the terminating line. However, in the case there is no data for the starting line or the terminating line, the scope from each of the starting point of the terminating line or the starting line to the terminating point thereof is recognized as marker area.

In this case, third detecting means for distinguishing the leadingness and consecutiveness of the marker line for the plane of a document from the mutual relationship of the one-dimensional. marker line for each of the lines detected by the first detecting means, continuing the non-consecutive portion in the case the distance of the non-consecutiveness is less than the appointed distance for the non-consecutive portion by calculating a hypothetic line and detecting the area surrounded by the two-dimensional marker line is composed by the steps S23, S24 and S26 through S32.

Such a processing as shown in the above is continued until it is judged (in the step 33) that the processing has been terminated for all the scanning areas, renewing the marker area data of the current line and the marker area data of the preceding line.

Also, each data of this case can be obtained as being condensed to one-eighth.

Thereafter, the change means 3 is changed over and controlled according to the data of the area surrounded by the two-dimensional marker line detected as shown in the above, thereby causing the image processing according to the masking or trimming to be conducted at a high speed one after another.

Therefore, according to the image distinguishing device pertaining to this embodiment of the invention, it is remarkably simple to detect the portion to be about to be trimmed or masked on a document image only by surrounding the portion with, for instance, a half tone marker pen.

Furthermore, according to the image distinguishing device of this embodiment of the invention, even though a marker line is discontinued on the way, the marker line can be securely detected without fail.

Continuously the third image distinguishing device according to still another embodiment of the invention is explained with reference to Fig. 1 (b).

As shown in Fig. 1(b), the third image distinguishing device according to this embodiment comprises binarization processing means 1 for binarizing the reading data of a document image with two mutually different threshold values T1 and T2 (Refer to Fig. 3(b)), first memory 2a for memorizing the data obtained by the binarization processing means 1 (first memorizing means corresponding to the first memorizing means 2 in the first and the second image distinguishing devices in the above description), first detecting means for detecting the starting point and the terminating point of a marker line (half tone area) for each of the scanning lines from the data memorized by the first memory 2a and for detecting the one-dimensional marker line pertaining to each line, second detecting means for distinguishing the leadingness and the consecutiveness of the marker line regarding the plane of the document from the mutual relation of the one-dimensional marker line for each of the lines detected by the first detecting means and for detecting the area surrounded by the two-dimensional marker line, and second memory 2b (the second memorizing means) for overlapping and memorizing each of the data of the area surrounded by the two-dimensional marker line detected for a plurality of scanning directions by means of the second detecting means.

Moreover, the image distinguishing device according to this embodiment of the invention is provided with change means 3 for carrying out the image processing according to the data of the area surrounded by the two-dimensional marker line detected by the second detecting means and memorized by the second memory 2b in addition to the above composition.

Namely, the corresponding third image distinguishing device is composed as for the above second memory 2b to be added as element to the composition of the first image distinguishing device.

In the binarization processing means 1, the reading data of a document image is compared with the first threshold value T1 in the first data comparator section in and furthermore is compared with the second threshold value T2 in the second data comparator section 5. And each of the data is inputted in the "AND" gate 6, where the reading data which is smaller than the first threshold value T1 is regarded as white bit "0" and the reading data which is larger than the threshold value T2 is regarded as black bit "0".

The reading data which is larger than the first threshold value T1 and smaller than the second threshold value T2 is extracted as half tone bit "1".

The data binarized and processed by the binarization processing means 1 as shown in the above description is sampled for instance at a frequency of 1/8 for attempting to decrease the volume of data memory and is inputted in the first memory 2a.

The reading data of a document image is the data of density that the output signal from a CCD line sensor 7 is analog-digitally converted to digital data by an A/D converter 8 and is divided into 256 gradations per dot. Then, the reading data is memorized in a line memory 9 as density data per line.

And the data of one line is outputted from the line memory 9 according to the output of horizontal synchronous signal (not illustrated).

The data outputted from the line memory 9 is outputted in the binarization processing means 1 through a switch SW1 on sub (dummy) scanning. Also, the switch SW1 is changed over on image processing. And the image data is read by the CCD line sensor 7 again. Thus, the image data is outputted to the change means 3 through the quasi half tone processing section lin (for determining the data according to the gradation) and a data buffer 15 per line. Accordingly, the change means 3 operates in accordance with the data from the central control section 10 (including the position and size data of a document).

Also, in this case, it is possible to get rid of sub scanning action on image processing by using, as data buffer 15, a memory having the capacity equivalent to the memory which the capacity of the first memory 2a is octuplicated.

The first detecting means and the second detecting means are embodied by the processing program memorized in advance in a memory of the central control section 10.

The second memory 2b is for forming a map to the document of the area surrounded by the two-dimensional marker line. Namely, the data of the result processed with erroneous scanning direction to a document for the data in the first memory 2a by the second detecting means is overlapped and memorized one after another in the corresponding second memory 2b.

The processing by the second detecting means is carried out one after another in the main scanning direction (the direction of a line) and the sub scanning direction (the direction of a row) as, for instance, using the positions P1 through P4 at the four corners of a document as origin of scanning as shown in Fig. 3 (b).

Namely, the main scanning direction is D1 and the sub scanning direction is L1 for the origin P1, the main scanning direction is D2 and the sub scanning direction is L2 for the origin P2, the main scanning direction is D3 and the sub scanning direction is L3 for the origin P3, and the main scanning direction is D4 and the sub scanning direction is L4 for the origin P4.

And in the case of trimming processing for the area (marker area) surrounded by the marker line, the data in the second memory 2b is processed by logical product with the marker area regarded as "0" and all the others regarded as "1". And subsequent data is overwritten on the preceding data one after another. As a result, the marker area is recognized as "0" and all the other is recognized as "1".

On the other hand, when carrying out the masking processing, the data on the second memory 2b is processed by logical sum with the marker area regarded as "1" and with all the others regarded as "0". And subsequent data is overwritten one after another on the preceding data. As a result, the marker area is recognized as "1" and all the others are recognized as "0".

The change means 3 is composed by logical circuits comprising a plurality of gates. And after the data is sampled at a frequency of 1/8 as shown in the above and is processed by the second detecting means as shown in the above, the data memorized in the second memory 2b is octuplicated, respectively and is inputted in the gate of the change means 3.

Hence, the image processing is selectively carried out at a high speed one after another according to the data of the area surrounded by the two-dimensional marker line detected by the second detecting means by actuation of the change means 3 according to the signals coming from the second memory 2b. In this case, for instance, the image processing is conducted by making ON and OFF control of the laser light emitting section ii according to the patterns by changing those of dither matrix.

The image distinguishing device is so composed as shown in the above description.

Continuously, the processing procedure of the image distinguishing device is explained with reference to Fig. 1 (b), Fig. 2(b), Fig. 2(e), Fig. 2(f) and Fig. 3 (b).

Then, S44, S42 in Fig.2 show each of action steps.

In the image distinguishing device according to this embodiment, the image distinguishing processing is conducted as changing the scanning direction with the four points P1 through P4 on a document image regarded as origin in connection with the data in the first memory 2a.

Namely, in the step S100, the image distinguishing processing executed with the P1 regarded as origin. In the step S200, the image distinguishing processing executed with the P2 regarded as origin. In the step S300, the image distinguishing processing executed with the P3 regarded as origin. In the step S400, the image distinguishing processing executed with the P4 regarded as origin.

Continuously, the detailed processing to be conducted in the steps S100 through S400 is explained with reference to Fig. 2 (b) and Fig. 2 (f).

Firstly, in the step S41, the line number and the address are set up at the origin (for instance, P1) of the area to be scanned by the central control section 10, in connection with the data in the first memory 2a. Also the data of each of the lines is binarized with the white and black bit regarded as "0" and the half tone bit regarded as "1" by the binarization processing means 1, is sampled at a frequency of 1/8 and is inputted in the first memory 2a.

Continuously, in the step S42, the starting point and the terminating point of a marker line pertaining to the data of one line are detected and the data of the starting point and the terminating point is memorized in the program memory 12 in the central control section 10.

The processing in the above step S42 is similar to that in the step S2 concerning the first image distinguishing device, and the detailed procedure is also the same as that in the steps S2a through S2m (Refer to Fig. 2(b)). Therefore, the explanation thereof is omitted.

As in the step S42 the starting point and the terminating point of the marker line at each line are detected and memorized in the program memory 12, it is judged in the step S43 (refer to Fig. 2(f)) whether or not there exists the consecutiveness between each of the data of the starting line and the terminating line of the marker domain data of the preceding line (this is the conceptional distinction when processing the data of the marker line, and refer to Fig. 3(b)) and those of the current line, and the result thereof is registered in the marker domain of the current line.

In this case, in the case that there is consecutiveness between the starting line and the terminating line of the marker domain data of the preceding line and those of the current line or that there is consecutiveness between the terminating line of the current line and that of the preceding line, the processing in the step S42 is conducted.

On the other hand, in the case that the consecutiveness is negated in the step S43, the leadingness for the detected marker line is judged in the step S44. And the data thereof is registered in the marker domain of the current line. .

The processing in the step S42 is similar to the processing in the step S4 pertaining to the first image distinguishing device and the detailed example of the processing is the same as that in Fig. 4 (a) through Fig. 4(d) and Fig. 5(a). Therefore, the explanation thereof is omitted herein.

As the leadingness of the marker line is judged in the step S44, the marker line is detected again in the step S42, and the consecutiveness is judged in the step S43. The detailed example for judging and registering the consecutiveness of the marker domain data between the preceding line and the current line in the step S43 (similar to the step S3 regarding the first image distinguishing device) is the same as that in the case of Fig. 5 (b) through Fig. 5 (e). Therefore, the detailed explanation thereof is omitted herein.

As shown in the above, after having processed in the step S43 as that there is consecutiveness as the starting line of the marker domain data of the preceding line, the marker line in the scanning line is detected in the step S45 as well as in the case of the above step S42. Continuously, in the step S46, it is judged whether or not there exists the consecutiveness of the terminating line data of the marker domain data of the preceding line for which is is been judged that the consecutiveness exists for the marker line detected in the step S43. And in the case that it is distinguished that there is the consecutiveness, the data is registered in the marker domain of the current line.

In the case that the consecutiveness is negated in the above step S46, the processing similar to that in the step Sinin is conducted in the step S47. This corresponds to the processing when the starting line and/or the terminating line to form the marker line is discontinued.

As the detailed example of the case that it is judged in the step S46 that there is the consecutiveness between the marker domain data of the current line and that of the preceding line and the data thereof is registered is the same as that in the case of Fig. 5(c) through Fig. 5 (e) regarding the above step 56 of the first image distinguishing device, the detailed explanation thereof is omitted herein.

Also, in this case, the step S43 corresppnds to the step S3 in the explanation of the step 56 for the first image distinguishing device.

As it is judged in the step S46 that the processing concerning the scanning for each of the line has been terminated and the area marked by the marker line is detected (in the step S48), it is then judged in the step S49 whether or not, for instance, the marker trimming processing is carried out for the area.

In the case that it has been judged in the step S49 that the trimming processing is executed, the marker domain is processed to be "0" and all the others are processed to be "1" by logical product in the step S50, and subsequent data is overwritten one after another on the preceding data in the second memory 2b. As a result, the marker area is recognized as "0" and all the others are recognized as "1" in the second memory 2b.

On the other hand, in the case that it is judged in the step S49 that the trimming processing is not carried out, the marker area is processed to be "1" and all the others are processed to be "0" by logical sum. Then, subsequent data is overwritten on the preceding data on the second memory 2b. As a result, the marker area is recognized as "1" and all the others are recognized as "0" in the second memory 2b (in the step S51).

Also in this case, the marker area, that is, the area surrounded by the marker line is recognized as being the scope surrounded by the starting point of the starting line to the terminating point of the terminating line. However, where there is no terminating line data (i.e., when there is non-consecutive portion), the scope from each starting point of the starting line to the terminating point is recognized as marker area.

As a result, it is possible to recognize all the area as marker area only when the area surrounded by the marker line is completely enclosed by the corresponding marker line or an opening (non-consecutive portion) exists downwards (Refer to Fig. 3(b)).

Therefore, even though non-consecutive portion of the marker line exists upwards or sidewards, the non-consecutive portion is processed as blurring or partial discontinuance of the marker line by detecting the marker domain as changing the travelling direction as in the image distinguishing device according to this embodiment. As a result, the area surrounded by the marker line having such non-consecutive portions as shown in the above can be securely detected as marker area without fail.

In this case, by the steps S43, S44 and S46 through S51, the second detecting means for judging the leadingness and the consecutiveness of a marker line concerning the plane of a document from the mutual relationship of the one-dimensional marker line for each of the lines detected by the first detecting means and for detecting the area surrounded by the two-dimensional marker line is composed.

Such a processing as shown in the above is continuously conducted until it is judged (in the step S52) that the processing has been terminated for all the scanning area, renewing the marker domain data of the current line and the marker domain data of the preceding line by turns.

Also, in this case, each of the data is obtained as being condensed to one-eighth.

Thereafter, the change means 3 is changed over and, controlled according to the data of the area surrounded by the two-dimensional marker line detected as shown in the above and memorized in the second memory 2b, thereby causing the image processing corresponding to the masking and trimming to be selectively conducted at a high speed one after another.

Therefore, also according to the image distinguishing device pertaining to this embodiment of the invention, it is remarkably simple to detect the portion to be about to be trimmed or masked on a document image only by surrounding the portion with, for instance, a half tone marker pen.

Furthermore, according to the image distinguishing device according to this embodiment of the invention, even though non-consecutive portion of a marker line exists upwards or sidewards, this non-consecutive portion is processed as blurring or partial discontinuance of the marker line. As a result, the area surrounded by the marker line having such a non-consecutive portion as shown in the above can be securely detected as marker area without fail.

## Claims

1. An image distinguishing device for distinguishing an area surrounded by a marker line of a half tone area on a document image, comprising :-
binarization processing means to binarize the reading data of the document image with two mutually different threshold values,
first memorizing means to memorize the data obtained by the binarization processing means,
first detection means to detect the starting point and the terminating point of a marker line for each of the scanning lines from the data memorized by the first memorizing means and to detect the one-dimensional marker line pertaining to each of the scanning lines, and
second detection means to distinguish the leadingness and the consecutiveness of marker line pertaining to the plane of the document from the mutual relationship of the one-dimensional marker line for each of the scanning lines detected by the first detection means and further to detect the area surrounded by the two-dimensional marker line.

2. An image distinguishing device for distinguishing the area surrounded by the marker line of the half tone area on a document image, comprising:-
binarization processing means to binarize the reading data of the document image with two mutually different threshold values,
first memorizing means to memorize the data obtained by the binarization processing means,
first detection means to detect the starting point and the terminating point of a marker line for each of the scanning lines from the data memorized by the first memorizing means and to detect the one-dimensional marker line pertaining to each of the scanning lines, and
third detection means to distinguish the leadingness and the consecutiveness of the marker line pertaining to the plane of the document from the mutual relationship of the one-dimensional marker line for each of the scanning lines detected by the first detection means, to continue a non-consecutive part by calculating a hypothetical marker line in the case that for any of the non-consecutive parts the length of the non-consecutive part is less than the appointed distance, and further to detect the area surrounded by the two-dimensional marker line.

3. An image distinguishing device for distinguishing the area surrounded by the marker line of the half tone area on a document image, comprising:-

binarization processing means to binarize the reading data of the document image with two mutually different threshold values,

first memorizing means to memorize the data obtained by the binarization processing means,

first detection means to detect the starting point and the terminating point of a marker line for each of the scanning lines from the data memorized by the first memorizing means and to detect the one-dimensional marker line pertaining to each of the scanning lines, and

second detection means to distinguish the leadingness and the consecutiveness of the marker line pertaining to the plane of the document from the mutual relationship of the one-dimensional marker line for each of the scanning lines detected by the first detection means and to detect the area surrounded by the two-dimensional marker line, and

second memorizing means to overlap and memorize each of the data of the area surrounded by the two-dimensional marker line which are detected in relation to a plurality of scanning directions by means of the second detection means.

Fig.1
(a)

# Fig.1
## ( b )

EP 0 405 400 A2

**Fig. 2**
**( a )**

START

S1
Setting the line no. and the address at the origin of a line to be scanned with the CPU.

S2
Detecting the marker line by scanning with the CPU, and memorizing the data in the program memory.

S3
Judging the consecutiveness with the marker domain data of the preceding line for the marker lines thus detected, and registering the result thereof in the marker domain of the current line.

No consecutiveness secured.

S4
Judging the leadingness for the detected marker line, and registering the data in the marker domain of the current line.

No leadingness secured.

S5
Detecting the marker line by scanning with the CPU, and memorizing the data in the program memory.

S6
Judging the consecutiveness of the marker domain data of the preceding line in which the consecutiveness exists for the marker lines detected in the step S3, and registering the data in the marker domain of the current line.

No consecutiveness secured.

S7
Judging the leadingness for the detected marker line, and registering the data in the marker domain of the current line.

Leadingness secured.

S8
Has one line been scanned ?
NO
YES

S9
Has the marker trimming been processed ?
NO
YES

S10
Using the CPU, writing "O" on the memory of the current line for the marker domain, and writing "1" for all the others.

S11
Using the CPU, writing "1" on the memory of the current line for the marker domain, and writing "0" for all the others.

S12
Has the processing for the scanning area been terminated ?
NO
YES

RETURN

17

EP 0 405 400 A2

## Fig.2 (b)

```
                    START

                       │
                       ▼
        ┌──────────────────────────┐  ← S2a
        │ Searching for the starting│
        │ point (half tone bit "1") │
        │ of the half tone domain.  │
        └──────────────────────────┘
                       │
                       ▼
              ◇ Judging              ← S2b                    ┌──────────────────────┐  ← S2k
              whether or not the         ── NO ──────────────│ The address is        │
              conditions of the starting                     │ incrementally increased│
              point of the half tone                         └──────────────────────┘
              domain are satisfied                                      ▲
                       │                                                │
                      YES                      ◇ Has one      ── NO ────┘
                       │                       line been scanned  ← S2i
                       ▼           ← S2c           ?
        ┌──────────────────────┐                  │
        │ Memorizing the starting                YES
        │ point of the half tone │
        │ domain.                │
        └──────────────────────┘
                       │
                       ▼
   S2d  ┌──────────────────────────┐
        │ Searching for the starting│
        │ point (White and black bit│
        │ "0") of the white and black│
        │ domain.                   │
        └──────────────────────────┘
                       │
                       ▼
   S2e     ◇ Judging                                       ┌──────────────────────┐  ← S2l
           whether or not                ── NO ───────────│ The address is        │
           the conditions of the                          │ incrementally increased│
           starting point of the                          └──────────────────────┘
           white and black                                          ▲
           domain are satisfied                ◇ Has one   ── NO ───┘
                       │                        line been scanned  ← S2j
                      YES                            ?
                       │                             │
                       ▼          ← S2f             YES
        ┌──────────────────────┐                    │
        │ Memorizing the coodinate                  ▼
        │ value of the starting  │        ┌──────────────────────┐  ← S2m
        │ point of the white and │        │ Setting a flag at the │
        │ black domain minus 1 as│        │ end portion (error).  │
        │ terminating point of   │        └──────────────────────┘
        │ the half tone domain.  │                    │
        └──────────────────────┘                    │
                       │                             │
                       ▼          ← S2g              │
        ┌──────────────────────┐                    │
        │ Operating the thickness│                   │
        │ of the line from the   │                   │
        │ starting point and the │                   │
        │ terminating point of   │                   │
        │ the half tone domain.  │                   │
        └──────────────────────┘                    │
                       │                             │
                       ▼                             │
   S2h       ◇ Does the                              │
        NO   thickness of the half                   │
        ─── tone domain exceed the ── YES ───────────┘
             prescribed value ?
                       │
                      (YES)
                       ▼
                    RETURN
```

18

Fig. 2
( c )-1

START
S21

Setting the line no. and the address at the origin of the area to be scanned with the CPU.

S22

Detecting the marker line by scanning with the CPU, and memorizing the data in the program memory.

S23

Judging the consecutiveness with the marker domain data of the preceding line exists for the detected marker lines, registering the result thereof in the marker domain of the current line, and setting the flag 1 of the marker area data of the consecutive preceding line.

No consecutiveness secured.

S24

Judging the leadingness for the detected marker line, and registering the data in the marker domain of the current line.

S25

Detecting the marker line by scanning with the CPU, and memorizing the data in the program memory.

S26

Judging the consecutiveness of the marker domain data of the preceding line in which the consecutiveness exists for the marker lines detected in the step S3, registering the data in the marker domain of the current line, and setting the flag 2 of the marker area data of the consecutive preceding line.

No consectiveness secured.

No leadingness secured.

S27

Judging the leadingness for the detected marker lines, and registering the data in the marker domain of the current line.

S28

NO    Has one line been scanned ?

YES

Leadingness secured.

b

a

Fig. 2
( c )-2

(b)

(a)

S29

By scanning on the memory of the current line "+n" lines in connection with the marker area data which does not have any consecutiveness with the marker line of the current line in the marker area data of the preceding line and judging whether or not the non-consecutiveness is continued more than "+n" lines.

The non-consecutiveness is more than "+n" lines or when both the flags 1 are 2 are "1".

Supposed that the marker line is consecutive, writing the marker area data of the preceding line in the marker area data of the current line.

S30
Has the marker trimming been processed ? — NO

YES

S31
Using the CPU, writing "0" on the memory of the current line for the marker domain and "1" for all the others.

S32
Using the CPU, writing "1" on the memory of the current line for the marker domain and "0" for all the others.

S33
NO — Has the processing for the scanning area been terminated ?

YES

RETURN

**Fig. 2**
**( d )**

START

C

(No area in which the flags
1 and 2 are "O" exists, or non-
consecutiveness exists more
than "n" lines.)

RETURN

S9a
By scanning the marker area data
of the preceding lines, searching
for a marker area where either of
the flag 1 or 2 is "O" both of them
are "O".

(Flag 1 is "O".)

S9b
Judging whether or not the consecutiveness
for the coordinate values "XA" and "XB"
shown by the marker area of the preceding
line exists in connection with the current
line "+n" lines.

No consecutiveness
secured.

(Consecutiveness secured)

Writing "XA" and "XB" as the starting
line of the marker area of the
current line shown by the flag 2.

S9c

S9d
Writing "XO" and "X1" as the
terminating point data in the
memory area corresponding
to the starting line of the
marker area of the current line
shown by the flag 2.

C

(Flag 2 is "O".)

S9e
Judging wheter or not the consecutiveness
exist for the coordinates "XC" and "XD" shown
by the marker area of the preceding line in
connection with the current line "+n" lines.

(No consectiveness
secured.)

(Consecutiveness secured.)

S9f
Writing "XC" and "XD" as the terminating line of
the marker area of the current line shown
by the flag 2.

S9g
Writing "XO" and "X1" as the
starting point data in the
memory area corresponding
to the terminating line of
the marker area of the
current line show by the
flag 2.

C

(Flags 1 and 2 are "O".)

S9j
Writing the starting line
(XA, XB) and the terminating
line (XC, XD) in the marker
area of the current line
as new marker area data.

C

S9h
Judging whether or not the starting
line data is the same as the terminating
line data with reference to the marker
area data of the preceding line.

Both the starting line and
the terminating line are the
same (Fig 5 (j)).

C

S9i
Judging whether or not the consecutiveness
exists for the coordinates "XA", "XB", "XC", and
"XD" shown by the marker area of the preceding
line in connection with the current line "+n" lines

Both the starting line
(XA, XB) and the terminating
line (XC, XD) have the
consecutiveness.

C

21

## Fig. 2
## (e)

```
        ┌──────────────┐
        │    START     │
        └──────────────┘
                │                                    S100
                ▼
┌────────────────────────────────┐
│ Processing is carried out with  the │
│ scanning origin as "P1", the dot │
│ scanning direction as "D1" and the │
│ line scanning direction as "L1". │
└────────────────────────────────┘
                │                                    S200
                ▼
┌────────────────────────────────┐
│ Processing is carried out with the │
│ scanning origin as "P2", the dot │
│ scanning direction as "D2" and the │
│ line scanning direction as "L2". │
└────────────────────────────────┘
                │                                    S300
                ▼
┌────────────────────────────────┐
│ Processing is carried out with  the │
│ scanning origin as "P3", the dot │
│ scanning direction as "D3" and the │
│ line scanning direction as "L3". │
└────────────────────────────────┘
                │                                    S400
                ▼
┌────────────────────────────────┐
│ Processing is carried out with the │
│ scanning origin as "P4", the dot │
│ scanning direction as "D4" and the │
│ line scanning direction as "L4". │
└────────────────────────────────┘
                │
                ▼
        ┌──────────────┐
        │    END       │
        └──────────────┘
```

Fig. 2
(f)

START

S41
Setting the line no. and the address at the origin of the dot scanning direction of the next line to be scanned with the CPU.

S42
By scanning on the memoly with the CPU, detecting the marker line and memorizing the data in the program memory.

S43
Judging for the consecutiveness with the marker domain data of the preceding line in connection with the detected marker line, and registering the result thereof in the marker domain of the current line.

(No consecutiveness secured.)

S44
Judging the leadingness for the detected marker line and registering the data in the marker domain of the current line.

S45
By scanning on the memory with the CPU, detecting the marker line and memorizing the data in the program memory.

S46
Judging the consecutiveness of the marker domain data of the preceding line for which the conseativeness exists for the marker lines detected in the step S43, and registering the data in the marker domain of the current line.

S47
Judging the leadingness for the detected marker line and registering the data in the marker domain of the current line.

S48
Has one line been scanned?
NO
YES

S49
Has the marker trimming been terminated?
NO
YES (Trimming)

S50
Taking and writing the logic product with the data on the memory of the current line and the the marker domain regarded as "0" and all the others regarded as "1".

S51
(Masking)
Taking and writing the logic sum with the data on the memory of the current line and the marker domain regarded as "1" and all the others regarded as "0".

S52
Has the processing corresponding to the scanning area been terminated?
NO
YES

RETURN

## Fig.3
### ( a )

Document mat
(Base color: Gray )

Origin

Document

Xes (starting point)
Xee. (Terminating point)
Terminating line

Xss (Starting point)
Starting line
Xse (Terminating point)

Marker line
( Half tone area)

Character

Black
(T₂)

0

Half tone

1

(T₁)

White

0

Document mat

Area surrounded by the marker line in the half tone area

Document mat

Document

## Fig. 3
### ( b )

Document mat
(Base color : Gray)

Main scanning direction

Sub scanning direction

$P_1$

$P_4$

$D_1$

$L_1$

Document

$L_4$

$D_4$

Xes (Starting point)

Xee (Terminating point)

Terminating line

XSS (Starting point)

Starting line

Xse (Terminating point)

$D_3$

$L_3$

$L_4$

$D_4$

$P_3$

Marker line
(Half tone area)

$P_2$

Character

Black
$(T_2)$

Half tone

$(T_1)$

White

0

1

0

Document mat

Area surrounded by the marker line in the half tone area

Document

Document mat

25

Fig.4 (a)

Fig.4 (b)

Fig.4 (c)

Fig.4 (d)

EP 0 405 400 A2

X0  X1

Preceding line
Current line

| No | Xss | Xse | Xes | Xee |
|----|-----|-----|-----|-----|
| 1 | X0 | X1 | X0 | X1 |
| 2 | | | | |
| | | | | |

Marker domain of the current line

Fig.5
( a )

XA  XB

Marker domain of the preceding line

| No | Xss | Xse | Xes | Xee |
|----|-----|-----|-----|-----|
| 1 | XA | XB | XA | XB |
| | | | | |

Preceding line
Current line

X0

X1

| No | Xss | Xse | Xes | Xee |
|----|-----|-----|-----|-----|
| 1 | X0 | X1 | X0 | X1 |

Marker domain of the current line

Fig.5
( b )

Fig.5 (c)

XA    XB

Preceding line
Current line

X00   X01   X10   X11

| No | Xss | Xse | Xes | Xee |
|----|-----|-----|-----|-----|
| Marker domain of the preceding line 1 | | | | |
| 2 | XA | XB | XA | XB |

| No | Xss | Xse | Xes | Xee |
|----|-----|-----|-----|-----|
| Marker domain of the current line 1 | X00 | X01 | | |
| 2 | | | | |

| No | Xss | Xse | Xes | Xee |
|----|-----|-----|-----|-----|
| Marker domain of the current line 1 | X00 | X01 | X10 | X11 |
| | | | | |

EP 0 405 400 A2

EP 0 405 400 A2

XA  XB  XC  XD

Preceding line
Current line

X00  X01  X10  X11

| | No | Xss | Xse | Xes | Xee |
|---|---|---|---|---|---|
| Marker domain of the preceding line | 1 | XA | XB | XC | XD |

| | No | Xss | Xse | Xes | Xee |
|---|---|---|---|---|---|
| Marker domain of the current line | 1 | X00 | X01 | | |

| | No | Xss | Xse | Xes | Xee |
|---|---|---|---|---|---|
| Marker domain of the current line | 1 | X00 | X01 | X10 | X11 |

Fig. 5
(d)

| No | Xss | Xse | Xes | Xee |
|----|-----|-----|-----|-----|
| 1 | XA | XB | XC | XD |

Marker domain of the preceding line

Preceding line
Current line

| No | Xss | Xse | Xes | Xee |
|----|-----|-----|-----|-----|
| 1 | X0 | X1 | X0 | X1 |

Marker domain of the current line

Fig.5 (e)

Preceding line
Current line

+1

(XC) XA    (XD) XB

(XC-1,XC,XC+1) (XD-1,XD,XD+1)
XA-1,XA,XA+1   XB-1,XB,XB+1

+n

Fig.5 (f)

## Fig. 5 (g)

XA  XB    XC  XD
Preceding line
Current line

| Marker area of the preceding line | No | Xss | Xse | F₁ | Xes | Xee | F₂ |
|---|---|---|---|---|---|---|---|
| | 1 | XA | XB | 0 | XC | XD | 1 |

## Fig. 5 (h)

XA  XB    XC   XD
Preceding line
Current line

| Marker area of the preceding line | No | Xss | Xse | F₁ | Xes | Xee | F₂ |
|---|---|---|---|---|---|---|---|
| | 1 | XA | XB | 1 | XC | XD | 0 |

## Fig. 5 (i)

XA XB    XC   XD
Preceding line
Current line

| Marker area of the preceding line | No | Xss | Xse | F₁ | Xes | Xee | F₂ |
|---|---|---|---|---|---|---|---|
| | 1 | XA | XB | 0 | XC | XD | 0 |

## Fig. 5 (j)

XA                XB
Preceding line
Current line

| Marker area of the preceding line | No | Xss | Xse | F₁ | Xes | Xee | F₂ |
|---|---|---|---|---|---|---|---|
| | 1 | XA | XB | 0 | XA | XB | 0 |

EP 0 405 400 A2